(19) Europäisches Patentamt / European Patent Office / Office européen des brevets

(11) **EP 2 966 597 A1**

(12) **DEMANDE DE BREVET EUROPEEN**

(43) Date de publication:
**13.01.2016 Bulletin 2016/02**

(51) Int Cl.:
***G06K 19/07*** *(2006.01)*

(21) Numéro de dépôt: **15174915.7**

(22) Date de dépôt: **01.07.2015**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA**

(30) Priorité: **07.07.2014 FR 1456520**

(71) Demandeur: **COMMISSARIAT A L'ENERGIE ATOMIQUE ET AUX ENERGIES ALTERNATIVES 75015 Paris (FR)**

(72) Inventeurs:
• **LE BARON, Estelle**
  **38530 BARRAUX (FR)**
• **THOMAS, Thierry**
  **38760 VARCES ALLIERES ET RISSET (FR)**

(74) Mandataire: **Thibon, Laurent**
  **Cabinet Beaumont**
  **1, rue Champollion**
  **38000 Grenoble (FR)**

(54) **ACCORD EN FRÉQUENCE D'UNE ÉTIQUETTE ÉLECTRONIQUE**

(57) L'invention concerne une étiquette électronique comportant : un premier enroulement conducteur plan (L) formant une antenne couplée, avec ou sans contact, avec un circuit électronique ; et un élément correcteur (32), rapporté sur le premier enroulement (L") et dont la forme et la position par rapport au premier enroulement sont choisies en fonction d'une correction de fréquence de résonnance souhaitée pour l'ensemble.

Fig 8

Printed by Jouve, 75001 PARIS (FR)

EP 2 966 597 A1

**Description**

Domaine

La présente invention concerne de façon générale les transpondeurs électromagnétiques et, plus particulièrement, les étiquettes électroniques (RFID TAG) susceptibles de communiquer sans contact avec un lecteur. L'invention concerne plus précisément le réglage de l'accord en fréquence de telles étiquettes électroniques.

Exposé de l'art antérieur

Les étiquettes électroniques sont aujourd'hui très largement utilisées pour échanger des informations sans contact avec un lecteur. Le plus souvent, ces étiquettes électroniques (étiquettes RFID) tirent l'alimentation nécessaire aux circuits qu'elles comportent du champ haute fréquence rayonné par le lecteur à portée duquel elles se trouvent, cette fonction est désignée par "télé-alimentation".
Idéalement, l'étiquette et le lecteur sont accordés en fréquence ce qui optimise la télé-alimentation et, par conséquent, la portée de fonctionnement de l'étiquette.
Toutefois, les dispersions de fabrication font, qu'en pratique, deux étiquettes RFID même issues d'une même fabrication ne présentent pas les mêmes caractéristiques en termes de fréquence d'accord. Cela nuit aux performances du système de communication dans lequel elles sont ensuite intégrées.
D'autre part, les conditions environnementales d'utilisation et le vieillissement des étiquettes électroniques ont parfois une incidence notable sur la fréquence d'accord de celle-ci.
Le document US-B-6172608 décrit un système comportant un interrogateur et une étiquette électronique. Une antenne supplémentaire de plus grande taille que celle de l'étiquette est couplée avec celle-ci pour améliorer le transfert de puissance en augmentant la surface du système antennaire.
D'autres documents, comme le document US-A-20080224874 décrivent des techniques pour régler l'accord en fréquence des étiquettes par rognage laser, ce qui risque de fragiliser l'étiquette. Les réglages sont par ailleurs longs et irréversibles.
Le document US-B-6796508 décrit une étiquette RFID dans laquelle les extrémités d'un enroulement conducteur sont connectées à un élément capacitif.
Le document JP-2001-160124 décrit une étiquette RFID dans laquelle une plaque métallique est placée au voisinage d'un enroulement conducteur.
Le document JP-2002-007985 décrit une méthode d'ajustement de la fréquence de résonance d'une étiquette électronique.
Le document JP-2003-218624 décrit une antenne amplificatrice pour étiquette électronique.

Résumé

Un mode de réalisation vise à pallier tout ou partie des inconvénients des étiquettes électroniques usuelles.
Un autre mode de réalisation vise à ajuster la fréquence d'accord d'une étiquette électronique après fabrication.
Un autre mode de réalisation vise à réduire la dispersion de fréquence des étiquettes.
Un autre mode de réalisation vise à ajuster la fréquence d'accord d'une étiquette électronique fabriquée de manière générique, à une valeur particulière parmi plusieurs, dédiée à une utilisation qui lui est attribuée.
Un autre mode de réalisation vise plus particulièrement une solution adaptée à des étiquettes fabriquées en grandes séries.
Un autre mode de réalisation est un résonateur inductif apte à assurer la fonction de correction réversible de fréquence d'une étiquette.
Un autre mode de réalisation vise une solution plus particulièrement adaptée à une étiquette électronique pourvue d'une antenne réalisée sous la forme d'un enroulement conducteur plan.
Ainsi, un mode de réalisation prévoit une étiquette électronique comportant :

un premier enroulement conducteur plan formant une antenne couplée, avec ou sans contact, avec un circuit électronique ;
un élément correcteur, rapporté sur le premier enroulement et dont la forme et la position par rapport au premier enroulement sont choisies en fonction d'une correction de fréquence de résonance souhaitée pour l'ensemble ; et
un troisième enroulement connecté électriquement en série avec le premier enroulement.

Selon un mode de réalisation, l'élément correcteur est un deuxième enroulement conducteur plan de taille inférieure à celle du premier enroulement.

Selon un mode de réalisation, les extrémités du deuxième enroulement sont non connectées.

Selon un mode de réalisation, dans laquelle les extrémités du deuxième enroulement sont reliées entre elles.

Selon un mode de réalisation, l'élément correcteur est un anneau conducteur plan de taille inférieure ou égale à celle du premier enroulement.

Selon un mode de réalisation, l'élément correcteur est une pastille conductrice de taille inférieure à celle du premier enroulement.

Selon un mode de réalisation, deux extrémités du premier enroulement sont connectées aux bornes du circuit électronique, un élément capacitif étant connecté en parallèle sur le premier enroulement.

Selon un mode de réalisation, le premier enroulement est de taille inférieure au troisième enroulement.

Selon un mode de réalisation, l'élément correcteur s'inscrit, en plan, dans la surface définie par le troisième enroulement.

Un mode de réalisation prévoit également procédé de correction de la fréquence de résonnance d'un premier enroulement d'une étiquette électronique, dans lequel un élément correcteur conducteur est placé sur l'étiquette électronique avec interposition d'un isolant, la position de l'élément correcteur par rapport au premier enroulement étant déterminée à partir de mesure de la fréquence de résonnance de l'étiquette complète.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 est une représentation très schématique d'un système de communication exploitant une étiquette électronique ;
la figure 2 est un schéma simplifié d'un mode de réalisation d'une étiquette électronique ;
la figure 3 illustre un mode de mise en oeuvre d'un dimensionnement d'un élément correcteur de fréquence d'accord ;
les figures 4A, 4B, 4C et 4D sont des représentations schématiques d'un mode de réalisation d'une antenne équipée d'un élément correcteur dans différentes positions de cet élément correcteur ;
la figure 5 représente le schéma électrique équivalent d'une étiquette électronique selon le mode de réalisation des figures 4A à 4D ;
les figures 6A et 6B illustrent deux positions d'un élément correcteur de la fréquence d'accord d'une étiquette électronique ;
la figure 7 illustre un exemple de réponse du coefficient de couplage en fonction d'un décalage en position d'une antenne correctrice ;
la figure 8 illustre l'influence sur la fréquence d'accord d'une variation de position de l'élément correcteur ;
la figure 9 représente un autre mode de réalisation d'un élément correcteur de la fréquence de résonance d'une étiquette électronique ; et
la figure 10 représente, de façon très schématique, un mode de réalisation d'une installation de positionnement d'éléments correcteurs sur des étiquettes électroniques.

Description détaillée

De mêmes éléments ont été désignés par de mêmes références aux différentes figures. Par souci de clarté, seuls les étapes et éléments utiles à la compréhension des modes de réalisation qui vont être décrits ont été représentés et seront détaillés. En particulier, la réalisation pratique des enroulements conducteurs plans formant les antennes n'a pas été détaillée, les modes de réalisation décrits étant compatibles avec les techniques usuelles. De plus, les circuits électroniques d'exploitation des signaux captés et transmis par une étiquette électronique ou par un lecteur n'ont pas non plus été détaillés, les modes de réalisation décrits étant là encore compatibles avec les circuits usuels.

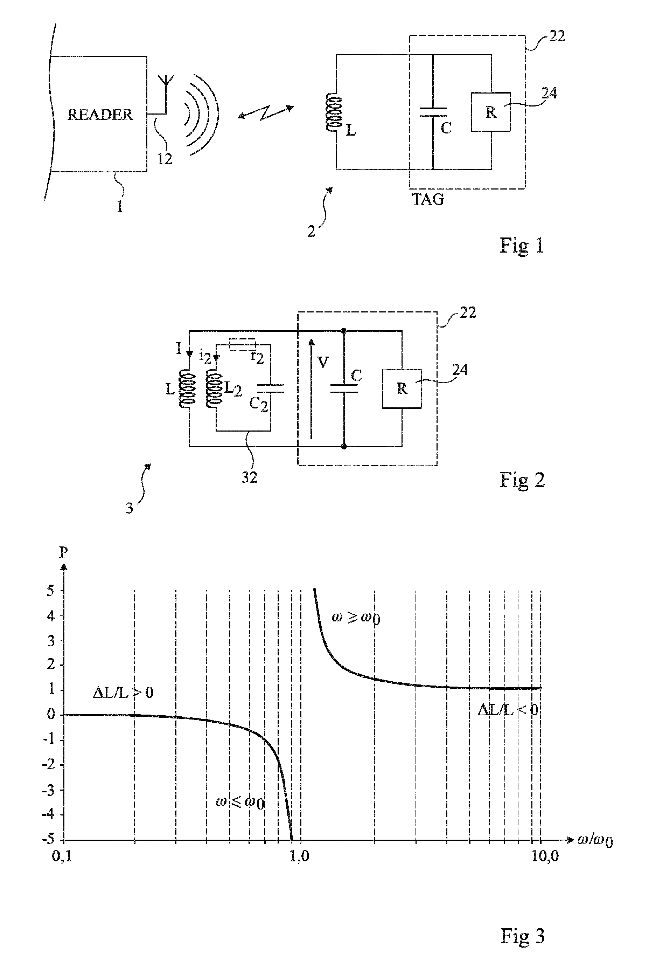

La figure 1 est une représentation très schématique d'un système de communication sans contact de type à transpondeur électromagnétique.

Un lecteur 1 (READER) émet par le biais d'une antenne 12 un champ radiofréquence destiné à être capté par un ou plusieurs transpondeurs électromagnétiques se trouvant à portée. Dans l'exemple de la figure 1, le transpondeur est une étiquette électronique 2 (TAG) comportant une antenne L sous la forme d'un enroulement inductif plan et, connectés aux bornes de cette antenne, un élément capacitif C et une charge 24 (R). Cette charge représente les pertes de l'antenne (circuit LC) et la consommation du circuit électronique associé à l'antenne. L'élément C a pour objet de former, avec l'antenne L, un circuit oscillant (dans cet exemple parallèle). La charge 24 est, selon les applications, plus ou moins évoluée. Il peut s'agir d'une charge passive (par exemple résistive) ou d'un circuit intégré actif. En pratique, l'élément capacitif C est le plus souvent intégré, avec la charge 24, dans une même puce 22. L'ensemble forme un circuit résonant à une fréquence d'accord dans le champ électromagnétique. Le cas échéant, l'étiquette est dépourvue de circuit intégré et est purement passive (LC). Généralement, les étiquettes électroniques tirent l'énergie nécessaire au fonctionnement des circuits (R) qu'elles comportent du champ électromagnétique rayonné par la borne ou lecteur 1 (READER).

Il existe de nombreux systèmes différents notamment selon les normes auxquelles ils répondent (par exemple IS015693, IS018000-3).

Le plus souvent, pour une transmission du lecteur vers le transpondeur, le lecteur module la porteuse haute fréquence qu'il émet. Dans le sens étiquette vers lecteur, le transpondeur modifie la charge qu'il constitue sur le circuit oscillant du lecteur. Cette variation de charge est alors détectée (en modulation de phase ou d'amplitude) par les circuits du lecteur.

Idéalement, les circuits oscillant du lecteur et résonnant de l'étiquette sont accordés sur une même fréquence : la fréquence du champ électromagnétique émis par le lecteur 1 (par exemple 13,56 MHz dans le cas des normes susmentionnées).

En pratique, lorsque les étiquettes sont fabriquées en série, les dispersions technologiques provoquent des écarts non négligeables en termes de variation de fréquence de résonnance de l'étiquette. Cela engendre également des différences en termes de performances d'une étiquette électronique à une autre, celles-ci se trouvant alors désaccordées de la fréquence de travail du système pour lequel elles sont prévues.

Typiquement, pour une fréquence de travail de 13,56 MHz, on a pu constater des écarts de fréquence de résonnance allant jusqu'à plusieurs centaines de kilohertz entre deux étiquettes issues de la même fabrication.

La figure 2 représente un mode de réalisation d'une étiquette électronique 3. Par rapport à l'étiquette 2 de la figure 1, on adjoint un deuxième circuit oscillant, résonant à une fréquence de travail très supérieure ou très inférieure à celle de l'étiquette. Ce résonateur passif est en relation de couplage avec le circuit oscillant LC de l'étiquette. D'un point de vue électrique, ce résonateur 32 comporte un enroulement inductif $L_2$ aux bornes duquel est connectée une capacité $C_2$ • Le circuit électrique équivalent comporte une résistance $r_2$ (en pointillés en figure 2) en série avec les deux autres éléments. En pratique, la résistance $r_2$ correspond à la résistance linéique de l'enroulement conducteur $L_2$ et aux pertes diélectriques de l'élément capacitif $C_2$. De même, l'élément capacitif $C_2$ correspond de préférence aux capacités parasites de l'enroulement conducteur $L_2$ en relation avec le substrat isolant qui le porte.

En pratique, l'enroulement conducteur $L_2$ est un enroulement conducteur plan réalisé sur un substrat isolant, l'ensemble étant rapporté sur ou à proximité de l'étiquette électronique (du type 2, figure 1) de façon à réaliser une étiquette 3 intégrant les deux éléments. Par "à proximité", on entend que l'enroulement $L_2$ est dans un plan parallèle à celui contenant le reste de l'étiquette, la distance entre les plans étant au plus de quelques millimètres.

La présence de l'élément résonateur 32 permet d'augmenter ou d'abaisser la fréquence de résonnance de l'étiquette.

Le fait d'adjoindre un résonateur passif sous la forme d'un timbre ou d'une pastille réalisé séparément et rapporté sur une étiquette fabriquée en série permet de corriger la fréquence de résonance et de compenser des dérives de fabrication de façon particulièrement simple. En particulier, cela ne requiert aucune intervention sur la fabrication en série elle-même des étiquettes électroniques de base. De plus, aucune intervention sur le lecteur n'est nécessaire.

Adjoindre un résonateur passif permet également de mutualiser la fabrication à une étiquette générique puis de finaliser les étiquettes selon diverses valeurs cibles de fréquence d'accord suivant leur mode final d'utilisation, pour tenir compte de l'influence des matériaux sur lesquels elles seront appliquées, ou pour tenir compte de la forme qu'elles vont prendre, par exemple à plat ou bien cintrées en forme de tuile sur un tuyau.

Dans un mode de réalisation simplifié, l'élément correcteur 32 est constitué d'une simple pastille conductrice rapportée sur l'étiquette avec interposition d'une couche isolante.

Le dimensionnement de l'élément correcteur dépend des caractéristiques électriques de résonance du circuit oscillant de l'étiquette.

Par rapport à d'autres solutions, un avantage est de ne pas intervenir physiquement sur le circuit oscillant principal de l'étiquette à la différence des solutions de découpage ou rognage qui sont irréversibles, parfois longues (le nombre ne réglages n'est connu qu'en fin d'ajustement) et qui fragilisent l'étiquette (perçage et protection). Un autre avantage de la solution proposée est qu'elle permet de procéder par essais, confirmations puis collage, ce qui est plus souple qu'une mise en oeuvre d'un réglage par rognages successif.

Par la suite, on désigne par :

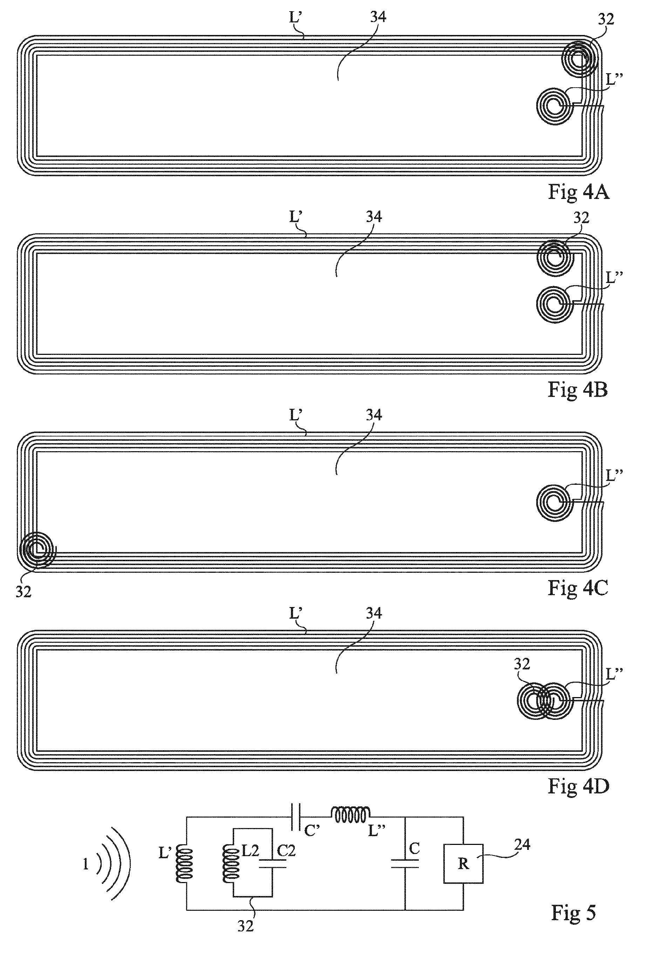

L, l'inductance de l'étiquette sans élément résonant 32 (L représente, dans le cas de la figure 2, l'inductance L du circuit oscillant ou, dans le cas d'étiquettes plus complexes comme on le verra par la suite en relation avec les figures 4 et suivantes, l'inductance du circuit de l'étiquette dans son ensemble) ;
C, la valeur de capacité équivalente associée à l'inductance L pour réaliser le résonateur LC (le condensateur C du circuit 22 dans le cas de la figure 2).
V, la tension aux bornes de l'élément inductif L (donc aux bornes de l'élément capacitif C) ;

I, le courant dans l'inductance L ;

$L_2$, l'inductance de l'élément ou circuit résonnant 32 ;

$C_2$, la capacité de l'élément 32 ;

$r_2$, les pertes ohmiques dans l'élément 32 ;

$Z_2$, l'impédance du circuit résonnant 32 ;

$i_2$, le courant dans le circuit résonnant 32 ;

k, le coefficient de couplage entre les enroulements L et $L_2$ ;

M, la mutuelle inductance entre les enroulements L et $L_2$ ;

$\omega$, la pulsation du circuit LC ; et

$\omega_0$, la pulsation de résonance du circuit résonnant 32. On peut écrire les formules suivantes :

$$V = j \cdot M\omega \cdot i_2 + j \cdot L\omega \cdot I \qquad \text{formule 1}$$

$$j \cdot M\omega \cdot I = -Z_2 \cdot i_2 \qquad \text{formule 2}$$

$$Z_2 = r_2 + j \cdot L_2\omega + \frac{1}{j \cdot C_2 \omega} \qquad \text{formule 3}$$

$$M = k \cdot \sqrt{L \cdot L_2} \qquad \text{formule 4}$$

En fonction du facteur de qualité Q, la pulsation $\omega_0$ à la résonnance ($2\pi f_0$, où $f_0$ représente la fréquence de résonnance) est donnée par les relations suivantes :

$$L_2 C_2 \omega_o^2 = 1 \qquad \text{formule 5}$$

$$Q = \frac{1}{r_2} \sqrt{\frac{L_2}{C_2}} \qquad \text{formule 6}$$

De façon usuelle, on peut également établir les relations suivantes exprimant l'impédance apparente Z' de l'inductance L sous l'influence de l'élément correcteur 32 :

$$V = j \cdot M\omega \cdot i_2 + j \cdot L\omega \cdot I = \left(\frac{M^2 \omega^2}{Z_2} + j \cdot L\omega\right) \cdot I \qquad \text{formule 7}$$

$$Z' = \left(\frac{M^2 \omega^2}{Z_2} + j \cdot L\omega\right) \qquad \text{formule 8}$$

L'impédance $Z_2$ peut alors s'écrire :

$$Z_2 = r_2 + j \cdot L_2\omega + \frac{1}{j \cdot C_2 \omega} = r_2 \cdot \left(1 + j \cdot Q \cdot \left(\frac{\omega}{\omega_o} - \frac{\omega_o}{\omega}\right)\right) \qquad \text{formule 9}$$

Le dimensionnement de l'élément correcteur 32 peut être effectué en application de formules littérales. Toutefois, en vue de simplifier la réalisation industrielle, les inventeurs considèrent que certaines approximations peuvent être effectuées et que de telles approximations sont particulièrement pertinentes.

Une première approximation est de considérer que les pertes ohmiques ($r_2$) du circuit de correction 32 peuvent être négligeables, ce qui revient à dire que le facteur de qualité Q est très nettement supérieur à 1. L'impédance $Z_2$ peut

alors s'exprimer :

$$Z_2 \approx j \cdot r_2 Q \cdot \left( \frac{\omega}{\omega_o} - \frac{\omega_o}{\omega} \right) = j \cdot \sqrt{\frac{L_2}{C_2}} \cdot \left( \frac{\omega}{\omega_o} - \frac{\omega_o}{\omega} \right) \qquad \text{formule 10}$$

Une deuxième simplification est de distinguer deux cas selon que la fréquence de résonance $f_0$ du circuit correcteur 32 est supérieure ou inférieure à la fréquence de travail f souhaitée (fréquence d'accord souhaitée pour le système à transpondeur dans laquelle l'étiquette doit fonctionner).

Dans le premier cas ($f_0 > f$), l'impédance $Z_2$ peut s'exprimer :

$$Z_2 \approx -j \cdot r_2 Q \cdot \frac{\omega_o}{\omega} = -j \cdot \sqrt{\frac{L_2}{C_2}} \cdot \frac{\omega_o}{\omega} \qquad \text{formule 11}$$

L'exploitation des formules 7 et 8 ci-dessus permet alors d'écrire:

$$Z' = \left( \frac{M^2 \omega^2}{Z_2} + j \cdot L\omega \right) = \left( j \cdot L\omega + \frac{M^2 \omega^2}{-j \cdot r_2 Q \cdot \frac{\omega_o}{\omega}} \right)$$

$$= \left( j \cdot L \cdot \omega + j \cdot \frac{M^2 \omega^2}{r_2 Q \cdot \omega_o} \right) \cdot \omega \qquad \text{formule 12}$$

$$Z' = \left( \frac{M^2 \omega^2}{Z_2} + j \cdot L\omega \right) = j \cdot \left( L + M \cdot \frac{M\omega_o}{r_2 Q} \cdot \left( \frac{\omega}{\omega_o} \right)^2 \right) \cdot \omega \qquad \text{formule 13}$$

On peut alors considérer que l'inductance L est artificiellement augmentée par l'élément correcteur 32 de la valeur suivante :

$$\Delta L = M \cdot \frac{M\omega_o}{r_2 Q} \cdot \left( \frac{\omega}{\omega_o} \right)^2 \qquad \text{formule 14}$$

Ou, en exploitant les formules 5 et 6 :

$$\Delta L = M \cdot \frac{M\omega_o}{L_2 \omega_o} \cdot \left( \frac{\omega}{\omega_o} \right)^2 = k^2 \cdot L \cdot \left( \frac{\omega}{\omega_o} \right)^2 \qquad \text{formule 15}$$

Il est également possible d'exprimer le rapport entre la variation $\Delta L$ de la valeur d'inductance et cette valeur L de la fonction suivante :

$$\Delta L / L = +k^2 \cdot \left( \frac{\omega}{\omega_o} \right)^2 \qquad \text{formule 16}$$

Le coefficient de couplage k dépend de la position de l'antenne ou pastille correctrice par rapport à l'antenne principale L.

Dans le second cas, où la fréquence de résonance du circuit correcteur 32 est nettement inférieure à la fréquence de travail ($f_0 < f$), les relations 11 à 16 ci-dessus deviennent les relations suivantes :

$$Z_2 \approx j \cdot r_2 Q \cdot \frac{\omega}{\omega_o} \qquad \text{formule 11'}$$

$$Z' = \left(\frac{M^2\omega^2}{Z_2} + j \cdot L\omega\right) = \left(j \cdot L\omega + \frac{M^2\omega^2}{\left(j \cdot r_2 Q \cdot \frac{\omega}{\omega_o}\right)}\right)$$

$$= \left(j \cdot L - j \cdot \frac{M^2}{(r_2 Q \cdot \omega_o)} \cdot \omega\right) \qquad \text{formule 12'}$$

$$Z' = \left(\frac{M^2\omega^2}{Z_2} + j \cdot L\omega\right) = j \cdot \left(L - M \cdot \frac{M\omega_o}{r_2 Q}\right) \cdot \omega \qquad \text{formule 13'}$$

$$\Delta L = -M \cdot \frac{M\omega_o}{r_2 Q} \qquad \text{formule 14'}$$

$$\Delta L = -M \cdot \frac{M\omega_o}{L_2\omega_o} = -k^2 \cdot L \qquad \text{formule 15'}$$

$$\Delta L / L = -k^2 \qquad \text{formule 16'}$$

Sans approximation, l'expression littérale du rapport ΔL/L en fonction des pulsations ω et $\omega_0$ peut s'exprimer de la façon suivante :

$$\Delta L / L = -k^2 \cdot \frac{\left(\frac{\omega}{\omega_o}\right)}{\left(\left(\frac{\omega}{\omega_o} - \frac{\omega_o}{\omega}\right) - j \cdot \frac{1}{Q}\right)} \qquad \text{formule 17}$$

Cette formule se déduit des expressions générales précédentes. En considérant un facteur de qualité Q élevé (d'au moins 10), on peut simplifier cette expression en l'expression suivante :

$$\Delta L / L = -k^2 \cdot \frac{\left(\frac{\omega}{\omega_o}\right)}{\frac{\omega}{\omega_o} - \frac{\omega_o}{\omega}} \qquad \text{formule 18}$$

La figure 3 représente la variation du facteur p :

$$p = \frac{\left(\frac{\omega}{\omega_o}\right)}{\left(\frac{\omega}{\omega_o} - \frac{\omega_o}{\omega}\right)} \qquad \text{formule 19}$$

en fonction du rapport $\omega/\omega_0$.

Comme il ressort de la figure 3, selon que la valeur souhaitée de la fréquence d'accord est inférieure à la valeur $f_0$ (partie gauche de la figure) ou supérieure à cette valeur (partie droite de la figure), le coefficient p est négatif ou positif, de sorte que l'on retrouve les signes exprimés précédemment aux formules 16 et 16'.

Selon un mode préféré de dimensionnement et de positionnement de l'élément correcteur 32 par rapport à l'antenne, on met en oeuvre les étapes suivantes.

La fréquence cible correspondant à la fréquence d'accord du système auquel est destinée l'étiquette (généralement la fréquence de la porteuse radio fréquence) est connue.

A partir de la fréquence mesurée de l'étiquette électronique dépourvue d'élément correcteur, on détermine l'écart de fréquence qui doit être corrigé (Δf), ou l'écart de pulsation Δω.

On sélectionne alors un élément correcteur 32 dont la fréquence de résonance $f_0$ est compatible avec le signe de la correction souhaitée.

Enfin, on sélectionne sa distance ou sa position par rapport à l'antenne de l'étiquette. On sélectionne de préférence une position dans un plan parallèle à celui du reste de l'étiquette relativement au dessin décrit par le circuit conducteur de son antenne, de manière à garder l'étiquette sous la forme d'un objet de faible épaisseur.

Plus l'élément correcteur est de taille réduite par rapport à la taille de l'antenne, moins la plage de coefficients de couplage k disponible est élevée par rapport à la position de cet élément correcteur mais plus son positionnement est aisé.

Selon un mode de réalisation où, pour une fabrication donnée, plusieurs éléments correcteurs ayant des valeurs d'inductance différentes sont disponibles, on détermine l'écart d'inductance lié aux dispersions de fabrication. On en déduit la compensation à réaliser ($\Delta L/L$). On sélectionne alors, dans un ensemble d'éléments correcteurs, celui qui se trouve dans la plage de correction possible. Enfin, on affine la correction par la position de cet élément correcteur par rapport à l'antenne de l'étiquette. Le coefficient de couplage est alors uniquement dû à des considérations géométriques dans la mesure où il n'y a pas de connexion électrique entre l'antenne L et l'élément $L_2$.

Dans un mode de réalisation simplifié, on utilise un même élément correcteur pour l'ensemble d'une fabrication (fréquence f0, pulsation $\omega_0$ fixées), et on se contente d'effectuer le réglage de la position de l'élément correcteur par rapport à l'antenne de l'étiquette qui conditionne le coefficient de couplage et donc la correction.

La détermination de la position de l'élément correcteur peut être, lors de la fabrication, déterminée à partir d'abaques établis dans des phases d'essai.

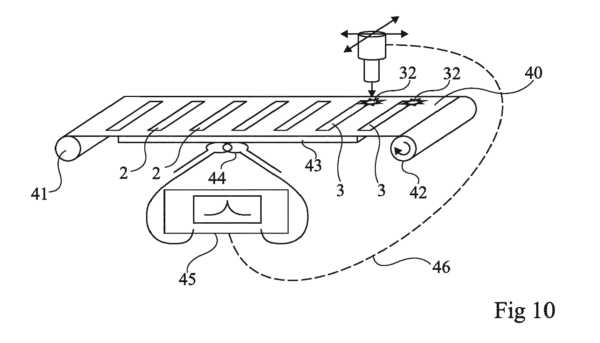

Selon un autre mode de réalisation qui sera illustré en relation avec la figure 10, cette position est déterminée à partir de mesures réelles.

Les figures 4A, 4B, 4C et 4D sont des vues schématiques de dessus d'un mode de réalisation d'une antenne L d'une étiquette électronique associée à un élément correcteur 32. Selon ce mode de réalisation, une antenne L' est destinée à capter le champ d'un lecteur et est associée à un bobinage intermédiaire L" destiné à la liaison avec les circuits internes du transpondeur (capacité C et charge R). Pour l'application des formules décrites ci-dessus, l'inductance L correspond à l'inductance des bobinages L' et L" connectées en série.

La figure 5 représente le schéma électrique équivalent simplifié de l'étiquette des figures 4. L'inductance L" est généralement de petite taille par rapport à l'inductance L' et est électriquement en série avec celle-ci, avec interposition d'un élément capacitif C'. L'association en série de l'inductance L' de l'élément C' et de l'inductance L" est connecté à des circuits intégrés (charge R) et comporte à ses bornes un élément capacitif C. En prenant l'exemple de ce mode de réalisation de la figure 5, la notation C à laquelle on se réfère en relation avec les formules décrite ci-dessus (circuit LC dont la pulsation vaut $\omega$) correspond à la mise en série des éléments C et C'.

D'autres réalisations d'une étiquette à deux enroulements conducteurs existent et ce qui sera décrit par la suite s'applique à ces différentes réalisations. Parmi celles-ci, on notera les cas suivants :

- les deux bobinages L' et L" sont électriquement en série, l'ensemble est connecté au circuit intégré 22 contenant la capacité C, pour former un résonateur simple RLC. La distinction entre les deux bobinages est purement géométrique.
- les deux bobinages L' et L" sont électriquement en série, l'ensemble étant refermé sur lui-même, un bobinage supplémentaire est connecté au circuit intégré 22 contenant la capacité C, pour former un résonateur simple RLC, dit "module". Ce bobinage supplémentaire et le bobinage L" sont en couplage inductif. C'est le cas de la figure 5.
- le bobinage L' est associé à une capacité série C' (ou plusieurs capacités séries), ou bien le bobinage est réalisé par des lignes "résonantes", de manière à former un premier résonateur. Le bobinage L" étant raccordé au circuit intégré 22 contenant la capacité C pour former un second résonateur, dit "module". Ces deux résonateurs sont connectés électriquement entre eux pour former un résonateur RLC.
- les deux bobinages L' et L" sont électriquement en série, en association avec une capacité C' ou plusieurs capacités série, l'ensemble est refermé sur lui-même. Un bobinage supplémentaire est connecté au circuit intégré 22 contenant la capacité C, pour former un résonateur simple RLC, dit 'module'. Ce bobinage supplémentaire et le bobinage L" sont en couplage inductif. L'ensemble forme un résonateur complexe équivalent à deux circuits résonants simples couplés.
- les deux bobinages L' et L" sont électriquement en parallèle, en association avec une capacité C' parallèle, pour former un premier résonateur RLC. Un bobinage supplémentaire est connecté au circuit intégré 22 contenant la capacité C, pour former un second résonateur RLC, dit "module". Ce bobinage supplémentaire et le bobinage L" sont en couplage inductif, l'ensemble forme un résonateur complexe équivalent à deux circuits résonants simples couplés.

Pour les structures sans bobinage supplémentaire, le couplage mutuelle s'effectue entre les enroulements $L_2$ et L', entre $L_2$ et L", ou bien les deux. Par exemple, dans les cas où les enroulements L' et L" sont électriquement en série (ils sont parcourus par un même courant), leurs inductances respectives sont alors des inductances "partielles" correspondant à deux parties d'un enroulement d'ensemble d'une inductance L (L=L'+L"+2.M', où M' est la mutuelle inductance entre les deux enroulements L' et L"). Ce qui importe pour le réglage par l'élément correcteur 32, c'est la valeur du couplage entre le bobinage $L_2$ et le bobinage d'ensemble L, que ce couplage provienne de la proximité entre les enroulements $L_2$ et L' ou entre les enroulements $L_2$ et L". Les formules décrites en relation avec l'exemple de la figure 2 s'appliquent en considérant l'inductance d'ensemble L.

Dans de tels systèmes, l'inductance L' est destinée à capter le champ provenant du lecteur 1. L'élément correcteur 32 est destiné à corriger d'éventuelles dispersions de fabrication de cette inductance L' de taille relativement importante par rapport aux tailles des inductances L" et $L_2$. L'inductance L" constitue une antenne de transmission (à la manière d'un transformateur pour les circuits électroniques de traitement des informations reçues). Dans l'exemple illustré par les figures 4A à 4D, l'enroulement $L_2$ constituant l'élément correcteur 32 a approximativement la même taille que l'enroulement L".

Comme l'illustrent les figures 4A à 4D, l'élément correcteur 32 peut être placé à différents endroits sur l'étiquette électronique, dans un plan parallèle à son enroulement plan L', en fonction de la correction souhaitée.

Le coefficient de couplage minimal sera obtenu pour un élément correcteur 32 placé au centre de l'enroulement L'.

Dans l'exemple de la figure 5, le couplage maximal sera obtenu pour un positionnement de l'enroulement $L_2$ sur l'enroulement L" (bien entendu avec l'interposition de l'isolant 34 formant le substrat).

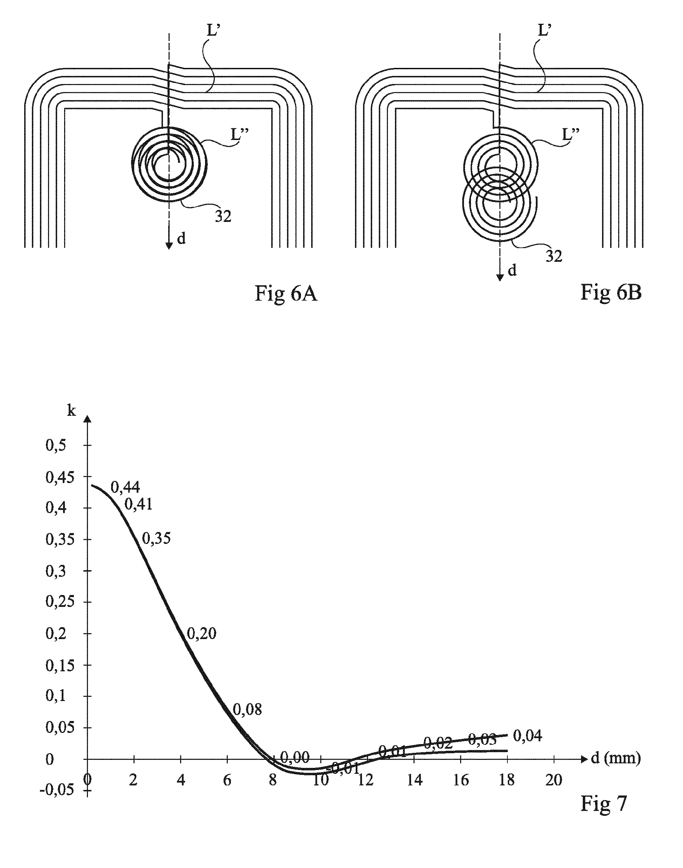

Les figures 6A et 6B illustrent, par des vues partielles de l'étiquette électronique, deux autres modes de placement de l'élément correcteur 32. La figure 6A illustre le cas d'un couplage maximal. La figure 6B illustre un autre cas où la pastille constituant l'enroulement $L_2$ recouvre au moins partiellement l'enroulement L".

La figure 7 illustre un exemple d'allure du coefficient de couplage k en fonction de l'écartement (distance en mm) vers l'intérieur de l'enroulement L' (symbolisé par une flèche d aux figures 6A et 6B). Comme le fait ressortir cette figure, les coefficients de couplage les plus importants (entre 0,05 et 0,45) sont obtenus pour une distance inférieure à 6 mm.

L'exemple particulier représenté aux figures 4, 6, 7 et 8 concerne le cas :

d'une inductance L' ayant les dimensions suivantes :

longueur moyenne : 222 mm ;
largeur moyenne : 52,5 mm ;
nombre de spires : 6 ;
pas entre spires : 1,25 mm ;
largeur des spires : 0,85 mm ;
épaisseur des spires : 0,035 mm ;

d'une inductance L", réalisée par une structure de deux enroulement superposés telle que décrite dans le document FR-A-2 961 353, ayant les dimensions suivantes :

diamètre interne : 5,6 mm ;
diamètre externe : 12,4 mm ;
pas entre spires : 0,4mm ;
nombre de couches : 2 ;
nombre de spires : 2x9 ; et

d'une inductance $L_2$, réalisée par une structure de deux enroulement superposés telle que décrite dans le document FR-A-2 961 353, ayant les dimensions suivantes :

diamètre interne : 5,2 mm ;
diamètre externe : 13,2 mm ;
pas entre spires : 0,4mm ;
nombre de couches : 2 ;
substrat : polyimide 50μm ;
nombre de spires : 2x10.

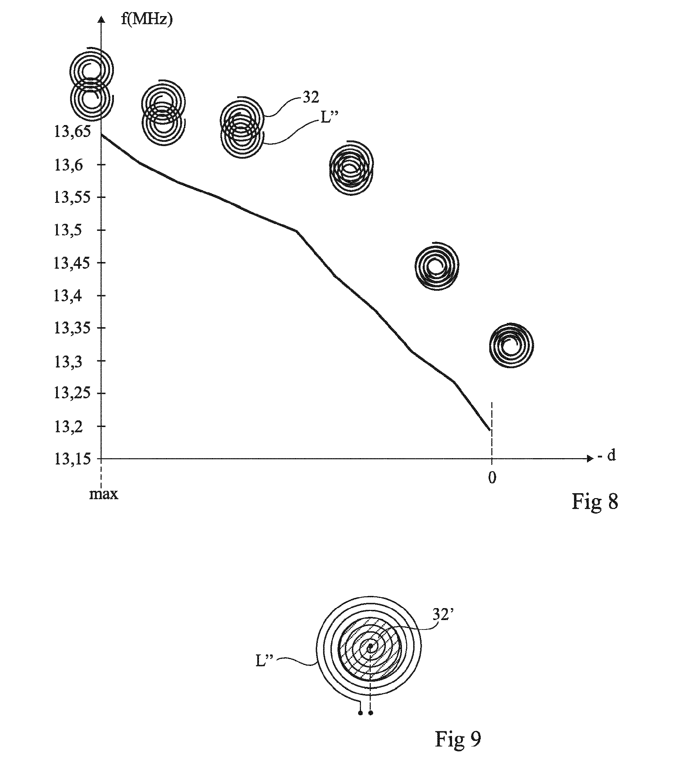

La figure 8 illustre la variation de fréquence de résonance obtenue en fonction du chevauchement d'un élément correcteur 32 sur un enroulement L" tel qu'illustré par les figures 4 et 6, dans le cas d'une antenne destinée à une fréquence de 13,56 MHz.

Comme il ressort de la figure 8, selon la disposition de l'élément 32 (superposition complète d=0 ou décalage maximal d=max sur l'extrémité de l'enroulement L"), la fréquence de résonance obtenue pour l'ensemble est comprise entre 13,2 MHz et 13,65 MHz.

La description des figures 4 à 8 illustre un exemple permettant de mieux appréhender les possibilités offertes par les modes de réalisation décrits, mais d'autres positions sont envisageables pour l'élément correcteur 32.

La figure 9 illustre une variante de réalisation selon laquelle l'élément correcteur 32 est une pastille conductrice 32' pleine plutôt qu'un enroulement conducteur, pour une correction négative ($\Delta L/L<0$). En effet, un élément de correction ayant une fréquence de résonance $f_0$ très faible peut être à l'extrême un bobinage en court-circuit ($f_0=0$). Une pastille conductrice est l'équivalent de réalisation très simple d'un bobinage en court-circuit.

La figure 10 représente, de façon très schématique, un mode de réalisation d'une installation de positionnement d'éléments correcteurs 32 sur des étiquettes électroniques 2 dans une fabrication en série.

Selon cet exemple, des étiquettes électroniques 2 sont fabriquées sur un substrat souple et se présentent, avant découpe, sous la forme d'un ruban 40 enroulé en une bobine d'étiquettes 2. Dans l'installation de positionnement des étiquettes 2, le ruban 40 est déroulé d'un rouleau 41 pour être enroulé sur un rouleau 42 après passage sur une table 43 de montage des éléments correcteurs 32. En face inférieure, la table 43 est équipée d'une tête 44 d'un appareil 45 de mesure de la fréquence d'accord de l'étiquette 2. Cet appareil commande (liaison 46) la position d'un distributeur 46 d'éléments correcteurs 32 par rapport à l'étiquette 2 en cours de test. Une fois l'accord souhaité obtenu, la pastille 32 est, par exemple, collée sur l'étiquette 2 qui devient l'étiquette corrigée 3.

Un avantage des modes de réalisation qui ont été décrits est qu'il est désormais possible de corriger les aléas de fabrication d'antenne afin de compenser la dispersion de fréquence d'accord.

Un autre avantage des modes de réalisation décrits est que la mise en oeuvre de la correction est particulièrement aisée et ne réclame pas d'intervention sur la fabrication de l'étiquette principale elle-même. En particulier, la correction peut être effectuée de façon indépendante de la fabrication.

Divers modes de réalisation ont été décrits, diverses variantes et modifications apparaîtront à l'homme de l'art. En particulier, les enroulements conducteurs sont bien entendu en pratique portés par des substrats isolants et sont isolés les uns des autres. L'épaisseur d'isolant influence le facteur de couplage.

Par ailleurs, la mise en oeuvre pratique des modes de réalisation décrits est à la portée de l'homme du métier à partir des indications fonctionnelles données ci-dessus, que ce soit pour le dimensionnement de l'élément correcteur à prévoir ou pour son positionnement.

**Revendications**

1. Etiquette électronique (3) comportant :

   un premier enroulement conducteur plan (L) formant une antenne couplée, avec ou sans contact, avec un circuit électronique (24) ;
   un élément correcteur (32), rapporté sur le premier enroulement (L) et dont la forme et la position par rapport au premier enroulement sont choisies en fonction d'une correction de fréquence de résonance souhaitée pour l'ensemble ; et
   un troisième enroulement connecté électriquement en série avec le premier enroulement.

2. Etiquette électronique selon la revendication 1, dans laquelle l'élément correcteur (32) est un deuxième enroulement conducteur plan ($L_2$) de taille inférieure à celle du premier enroulement (L).

3. Etiquette électronique selon la revendication 2, dans laquelle les extrémités du deuxième enroulement ($L_2$) sont non connectées.

4. Etiquette électronique selon la revendication 2, dans laquelle les extrémités du deuxième enroulement ($L_2$) sont reliées entre elles.

5. Etiquette électronique selon la revendication 1, dans laquelle l'élément correcteur (32) est un anneau conducteur plan de taille inférieure ou égale à celle du premier enroulement (L).

6. Etiquette électronique selon la revendication 1, dans laquelle l'élément correcteur (32) est une pastille conductrice (32') de taille inférieure à celle du premier enroulement (L).

7. Etiquette électronique selon l'une quelconque des revendications 1 à 6, dans laquelle deux extrémités du premier enroulement (L) sont connectées aux bornes du circuit électronique (22), un élément capacitif (C) étant connecté en parallèle sur le premier enroulement.

**8.** Etiquette électronique selon l'une quelconque des revendications 1 à 7, dans laquelle le premier enroulement est de taille inférieure au troisième enroulement.

**9.** Etiquette électronique selon la revendication 8, dans laquelle l'élément correcteur (32) s'inscrit, en plan, dans la surface définie par le troisième enroulement (L').

**10.** Procédé de correction de la fréquence de résonnance d'un premier enroulement (L) d'une étiquette électronique, dans lequel un élément correcteur (32, 32') conducteur est placé sur l'étiquette électronique avec interposition d'un isolant, la position de l'élément correcteur par rapport au premier enroulement étant déterminée à partir de mesure de la fréquence de résonnance de l'étiquette complète.

Fig 1

Fig 2

Fig 3

Fig 4A

Fig 4B

Fig 4C

Fig 4D

Fig 5

Fig 6A                                    Fig 6B

Fig 7

Fig 8

Fig 9

Fig 10

Europäisches
Patentamt

European
Patent Office

Office européen
des brevets

**RAPPORT DE RECHERCHE EUROPEENNE**

Numéro de la demande

EP 15 17 4915

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 6 796 508 B2 (MULLER PHILIPP [CH] MUELLER PHILIPP [CH]) 28 septembre 2004 (2004-09-28) * figures 1,3A,3B * * colonne 3, ligne 23 - colonne 4, ligne 13 * * colonne 4, ligne 58 - colonne 5, ligne 9 * ----- | 1,10 | INV. G06K19/07 |
| Y | JP 2001 160124 A (TOKIN CORP) 12 juin 2001 (2001-06-12) * figures 1-3 * * abrégé * * alinéas [0014] - [0018] * ----- | 1-10 | |
| X | JP 2002 007985 A (DAINIPPON PRINTING CO LTD) 11 janvier 2002 (2002-01-11) * figures 1,2,5B * * abrégé * ----- | 1,8,10 | |
| Y | JP 2003 218624 A (FEC INC) 31 juillet 2003 (2003-07-31) * figure 1 * * abrégé * ----- | 1-10 | **DOMAINES TECHNIQUES RECHERCHES (IPC)** G06K |

Le présent rapport a été établi pour toutes les revendications

| Lieu de la recherche | Date d'achèvement de la recherche | Examinateur |
|---|---|---|
| Munich | 23 septembre 2015 | Grob, Mark |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
.................................................................
& : membre de la même famille, document correspondant

EPO FORM 1503 03.82 (P04C02)

17

**ANNEXE AU RAPPORT DE RECHERCHE EUROPEENNE
RELATIF A LA DEMANDE DE BREVET EUROPEEN NO.**

EP 15 17 4915

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-09-2015

| Document brevet cité au rapport de recherche | | Date de publication | Membre(s) de la famille de brevet(s) | | Date de publication |
|---|---|---|---|---|---|
| US 6796508 | B2 | 28-09-2004 | EP | 1269412 A1 | 02-01-2003 |
| | | | JP | 2003529163 A | 30-09-2003 |
| | | | US | 2003169153 A1 | 11-09-2003 |
| | | | WO | 0173685 A1 | 04-10-2001 |
| JP 2001160124 | A | 12-06-2001 | AUCUN | | |
| JP 2002007985 | A | 11-01-2002 | AUCUN | | |
| JP 2003218624 | A | 31-07-2003 | JP | 3915092 B2 | 16-05-2007 |
| | | | JP | 2003218624 A | 31-07-2003 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6172608 B
- US 20080224874 A
- US 6796508 B
- JP 2001160124 A
- JP 2002007985 A
- JP 2003218624 A
- IS 015693
- IS 0180003
- FR 2961353 A